# EUROPEAN PATENT APPLICATION

(11) **EP 4 138 262 A2**
(43) Date of publication of application: **22.02.2023**
(21) Application number: 22189788.7
(22) Date of filing: 10.08.2022
(51) Int. Cl.: H02J 7/04

(54) **DC/DC CONVERTER**

(30) Priority: 19.08.2021 US 202117445493
(71) Applicant: NXP B.V., 5656 AG Eindhoven (NL)
(72) Inventor: Büthker, Henricus Cornelis Johannes, 5656AG Eindhoven (NL); Ghosh, Jyotirmoy, 5656AG Eindhoven (NL)
(74) Representative: Miles, John Richard

(57) **Abstract**

One example discloses a voltage converter, comprising: an input configured to receive a first voltage from a battery; an output configured to provide a second voltage to a load; a controller configured to reduce a battery current received from the battery if the first voltage received from the battery is below a first threshold voltage.

## Description

The present specification relates to systems, methods, apparatuses, devices, articles of manufacture and instructions for DCDC voltage conversion.

### SUMMARY

According to an example embodiment, a voltage converter, comprising: an input configured to receive a first voltage from a battery; an output configured to provide a second voltage to a load; a controller configured to reduce a battery current received from the battery if the first voltage received from the battery is below a first threshold voltage.

In another example embodiment, the controller is configured to generate an enable/disable control signal based on the first voltage received from the battery and the first threshold voltage.

In another example embodiment, the enable/disable control signal is a digital signal having an enable state and a disable state.

In another example embodiment, if the enable/disable control signal is set to the disable state, then power transfer from the battery to the load is stopped.

In another example embodiment, if the enable/disable control signal is set to the enable state, then power is transferred from the battery to the load.

In another example embodiment, if the enable/disable control signal is set to the disable state, then the voltage converter is placed in a low-power stand-by state.

In another example embodiment, the controller is configured to increase the battery current received from the battery if the first voltage received from the battery is above a second threshold voltage.

In another example embodiment, a difference between the first threshold voltage and the second threshold voltage defines a hysteresis.

In another example embodiment, the hysteresis is set to zero.

In another example embodiment, the controller is configured to no longer reduce the battery current received from the battery if the second voltage at the load reaches a third threshold voltage, even if the first voltage received from the battery is below the first threshold voltage.

In another example embodiment, the controller is configured to place the converter into a boost-mode such that the second voltage is greater than the first voltage.

In another example embodiment, the controller is configured to place the converter into a buck-mode such that the second voltage is less than the first voltage.

In another example embodiment, the voltage converter is a DC-to-DC voltage converter.

In another example embodiment, the voltage converter is a switched-capacitor voltage converter.

In another example embodiment, if the enable/disable control signal is set to disable, then the controller is configured to stop switching of the switched-capacitor voltage converter.

In another example embodiment, if the enable/disable control signal is set to enable, then the controller is configured to permit switching of the switched-capacitor voltage converter.

In another example embodiment, a maximum current the battery can deliver depends on an internal resistance of the battery and a minimum required load voltage; and the controller is configured to reduce the battery current received from the battery if the battery current is above the maximum current.

In another example embodiment, the battery is either a silver oxide battery or a printed battery.

In another example embodiment, further comprising a set of control logic configured to receive the enable/disable control signal and control the battery current received from the battery; and wherein the control logic is digital control logic.

The above discussion is not intended to represent every example embodiment or every implementation within the scope of the current or future Claim sets. The Figures and Detailed Description that follow also exemplify various example embodiments.

Various example embodiments may be more completely understood in consideration of the following Detailed Description in connection with the accompanying Drawings.

### BRIEF DESCRIPTION OF THE DRAWINGS

Figure 1 represents an example of battery voltage as function of load current (x-axis) for a set of internal battery resistances.
Figure 2 represents an example first voltage converter.
Figure 3 represents an example of a maximum battery current as function of an internal battery resistance.
Figure 4 represents an example graph of the first voltage converter in boost-mode operation.
Figure 5 represents an example second voltage converter.
Figure 6 represents an example graph of a hysteresis in the second voltage converter.
Figure 7 represents an example threshold logic within in the second voltage converter.
Figure 8 represents an example digital control logic circuit within in the second voltage converter.
Figure 9 represents an example analog control logic circuit within in the second voltage converter.
Figure 10 represents an example graph of the second voltage converter in boost-mode operation with a battery having a 40 Ω internal resistance.
Figure 11 represents an example graph of the second voltage converter in boost-mode operation with a battery having a 50 Ω internal resistance.
Figure 12 represents an example graph of the second voltage converter in buck-mode operation with a battery having a 150 Ω internal resistance.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

### DETAILED DESCRIPTION

Many internet of things (IOT) or small portable devices increasingly use very small and inexpensive batteries. These batteries may be silver-oxide button batteries, but can also be printed batteries. In the past, batteries always had a low internal resistance (e.g. just a few Ohms) and input current rarely had to be limited. However modern batteries in part due to their size and low-cost have much greater internal resistances.

The current that can be drawn from these batteries, depends heavily on their internal resistance, which is a function of their discharge-state (i.e. remaining battery charge). For example, if a discharged battery's current draw is too high, battery's output voltage might drop below the voltage converter's power-on-reset (POR) level, causing the electronic device using the battery to keep resetting and not start-up.

Approaches to limit an input current by a DCDC converter received from such batteries includes measuring and controlling the input current, which requires parts and complexity. Using such uniform current limiting techniques, however, results in fully-charged batteries starting-up (i.e. providing current) more slowly than they could, while substantially discharged batteries may still result in unreliable current output.

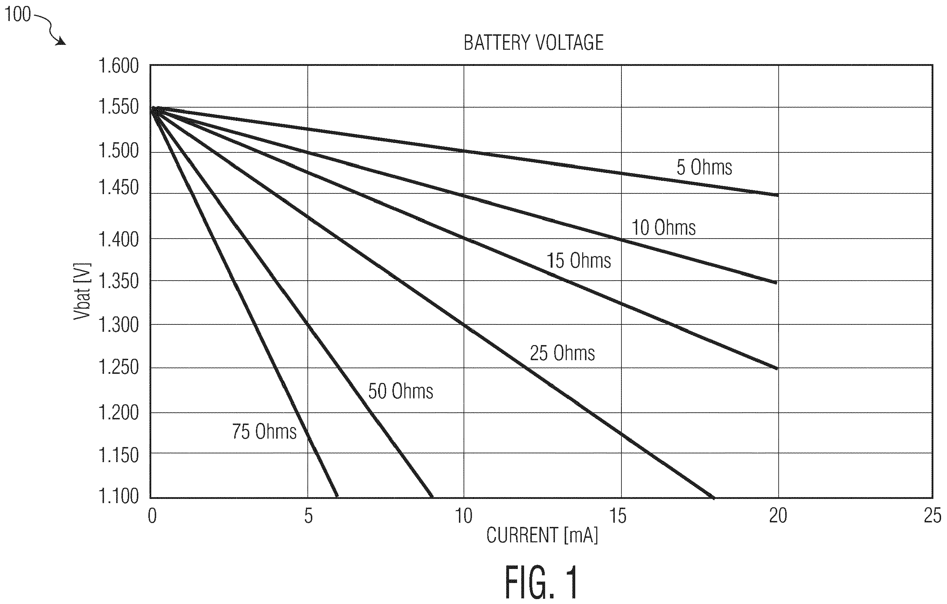

Figure 1 represents an example 100 of battery voltage (y-axis) as function of load current (x-axis) for a set of internal battery resistances (e.g. 5, 10, 15, 25, 50 and 75 Ω). A maximum current any battery can deliver depends on the internal battery resistance and the minimum required voltage.

For example, for a battery with a high internal resistance, say 75 Ω, and a minimum useful voltage of 1.1 V, a maximum load current as shown from Figure 1 is only 6 mA. For resistances below 22.5 Ω, maximum current is at least 20 mA. It is important that the terminal voltage does not drop below 1.1 V in this example. The safe voltage levels can be e.g. 1.2 V ± 50 mV.

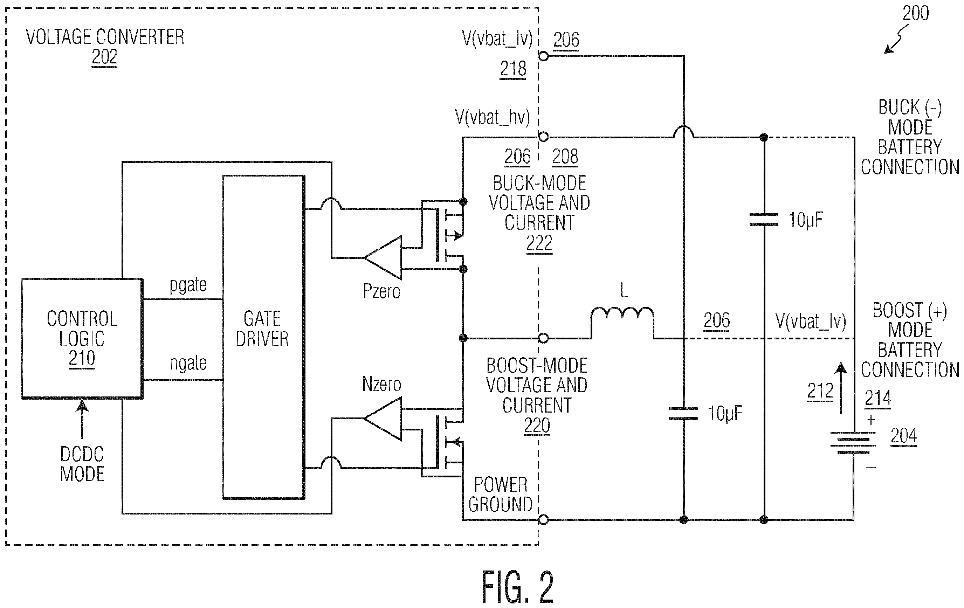

Figure 2 represents an example 200 first voltage converter 202. In this example, 200 the converter 202 is coupled to a battery 204 at a first location 206 for boost-mode operation (increasing output voltage) and at a second location 208 for buck-mode operation (decreasing output voltage). A battery current 212, battery voltage 214, boost-mode output voltage 216, buck-mode output voltage 218, boost-mode voltage and current 220, and buck-mode voltage and current 222 are also shown. In this example embodiment, the voltage converter 202 is a switched-capacitor voltage converter so two 10 µF switching capacitors are also shown.

The control logic 210 is configured to control the converter 202 using either a voltage mode or a (peak) current mode algorithm. In both modes an input current from the battery 204 is not controlled and is not constant. Using an average current mode algorithm the input current can be controlled, but the maximum current value still depends on the battery resistance.

Furthermore, some examples of the first converter 202 have analog control logic 210 state variables that can freeze. For example, analog types of control loops must be always active, are prone to saturate should their start-up be inhibited, and can also have stability issues.

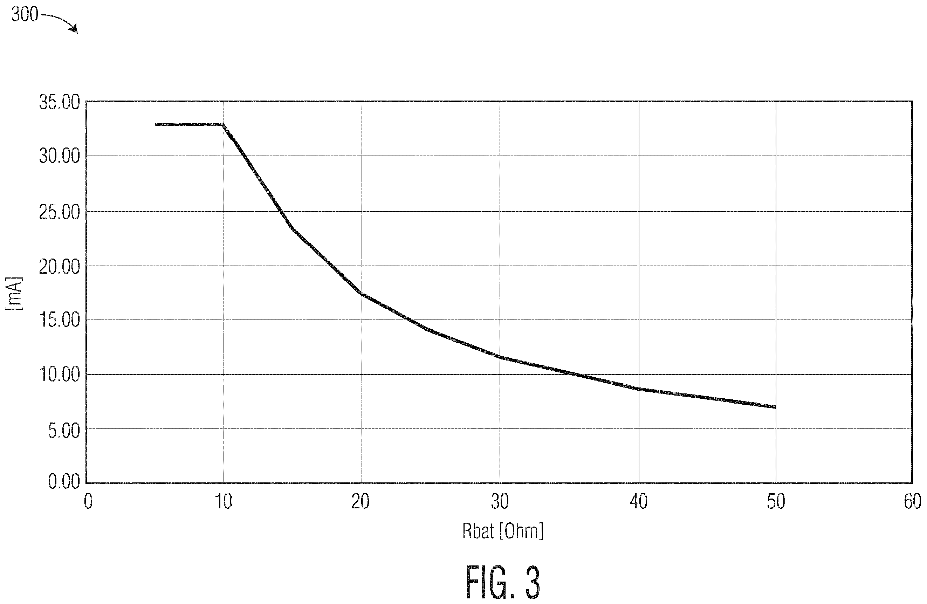

Figure 3 represents an example 300 of a maximum battery current (y-axis) as function of an internal battery resistance (x-axis). In an example boost configuration, the battery current 212 flows through inductor (L). This example 300 is for a battery 204 having a no-load voltage of 1.55 V (e.g. a silver-oxide battery) and a minimum safe loaded battery 204 voltage is 1.2 V, then the maximum current (y-axis) as function of battery resistance is shown.

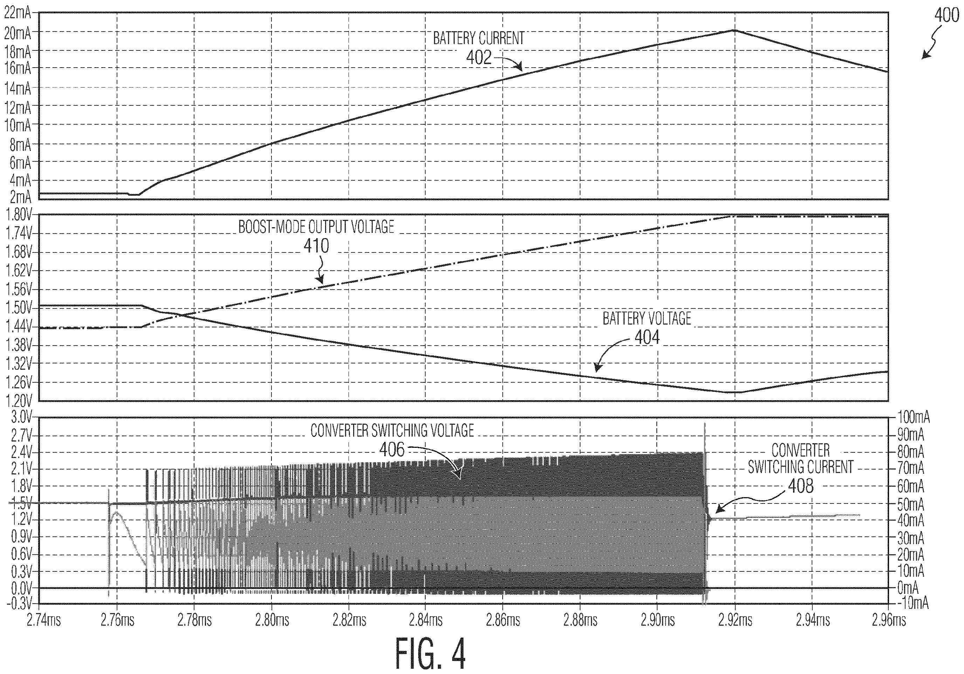

Figure 4 represents an example 400 graph of the first voltage converter 202 in boost-mode. This example 400 shows battery current 402, battery voltage 404 converter 202 switching voltage 406, converter 202 switching current 408, and converter 202 boost-mode output voltage 410. In this example, the switching voltage 406 and switching current 408 are at the 10 µF switching capacitor located at the boost-mode switching voltage and current 220 location shown in Figure 2.

In this simulated example, an allowable battery current can be as high as 30 mA or as low as 7 mA, and the battery has an internal resistance (Rbat) of 16 Ω. As the battery current 402 increases linearly to 20 mA, the battery voltage 404 can drop to 1.2 V, just about the critical level. An average inductor (L) converter switching current 408 in this simulation is 31 mA, which is already higher than the battery 204 can sustain for a longer time.

Now discussed below is an improved voltage converter that enables start-up of various electronic devices that use a battery, particularly those having a large internal battery resistance. This improved voltage converter is configured to pause electronic device during start-up when the battery voltage drops below a pre-defined battery voltage threshold, and resumes device start-up when another higher battery voltage threshold is exceeded. While in some example embodiments the battery has a high internal resistance, the voltage converter improves a reliable start-up of various electronic devices having a wide range of battery internal resistances and can also be used with any power source.

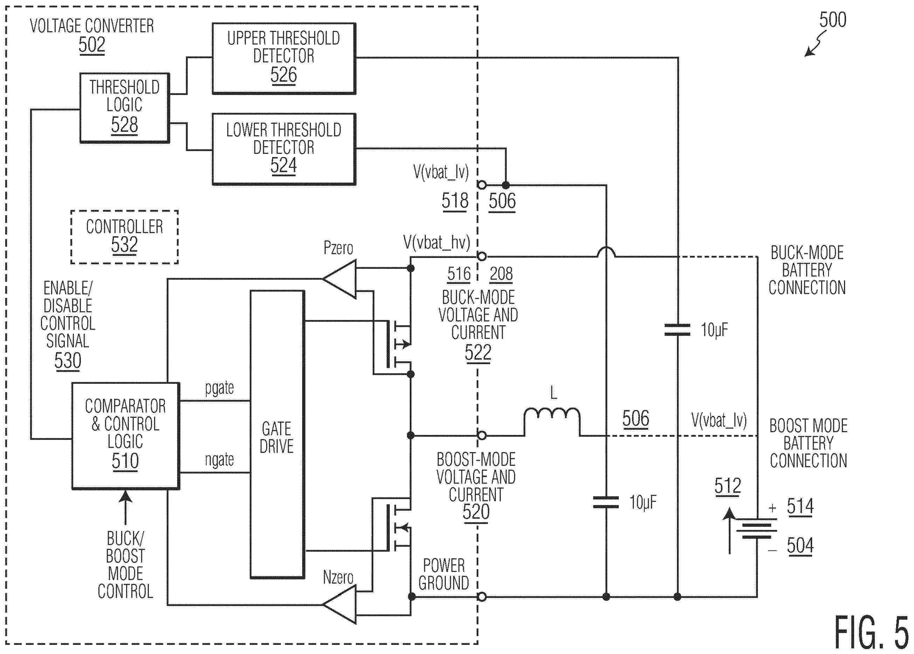

Figure 5 represents an example 500 second voltage converter 502. In this example, 500 the converter 502 is coupled to a battery 504 at a first location 506 for boost-mode operation and at a second location 508 for buck-mode operation. Comparator & control logic 510, a battery current 512, battery voltage 514, boost-mode output voltage 516, buck-mode output voltage 518, boost-mode voltage and current 520, and buck-mode voltage and current 522 are also shown. While in this example embodiment the voltage converter 502 is an inductive converter, in other example embodiments, the voltage converter 502 could be a switched-capacitor voltage converter.

The second voltage converter 502 also includes a lower threshold detector 524, an upper threshold detector 526, threshold logic 528, an enable/disable control signal 530, and a controller 532. The controller 532 is configured to control all functions of the second voltage converter 502.

The lower threshold detector 524 is configured to detect when the battery voltage 514 falls below a lower voltage threshold. The upper threshold detector 526 is configured to detect when the battery voltage 514 exceeds an upper voltage threshold. In various example embodiments, the voltage thresholds represent "safe" battery voltages 514. The voltage thresholds also provide a hysteresis as will be shown in the later Figures. Hysteresis between the voltage thresholds avoids stability issues that analog control loops (e.g. control logic 210) have.

In some example embodiments, the lower and upper detectors 524, 526 are implemented by another voltage-sensing element, such as a BOD (Brown-Out Detector). The lower and upper detectors 524, 526 can also be implemented using an Under-Voltage Lockout Circuit. However, such a circuit could reset the voltage converter 502 when the battery voltage 514 drops below the threshold if such a reset is undesired.

A load (not shown) is coupled to the first location 506 labeled the boost-mode output voltage 516 for boost-mode uses of the voltage converter 502. The load is coupled to second location 508 labeled the buck-mode output voltage 518 for buck-mode uses of the voltage converter 502.

When the voltage converter 502 starts up, the battery voltage 514 will drop gradually as current is delivered to the load. When the battery voltage 514 reaches the lower voltage threshold, the threshold logic 528 sets the enable/disable control signal 530 to disable the comparator & control logic 510 and give the battery voltage 514 the opportunity to recover. When the battery voltage 514 reaches the upper voltage threshold, the threshold logic 528 sets the enable/disable control signal 530 to enable the comparator & control logic 510 and continue provided current to the load.

In this way, the battery voltage 514 cycles between two safe threshold limits and start-up of various electronic devices is made more reliable. The battery current 512 is limited to a safe value, defined by the battery's 504 internal resistance. In some example embodiments, no monitoring of the battery current 512 by the voltage converter 502 is required.

Power efficiency is also improved because part of the circuitry can be switched off when the voltage converter 502 is paused (i.e. the enable/disable control signal 530 is set to disable).

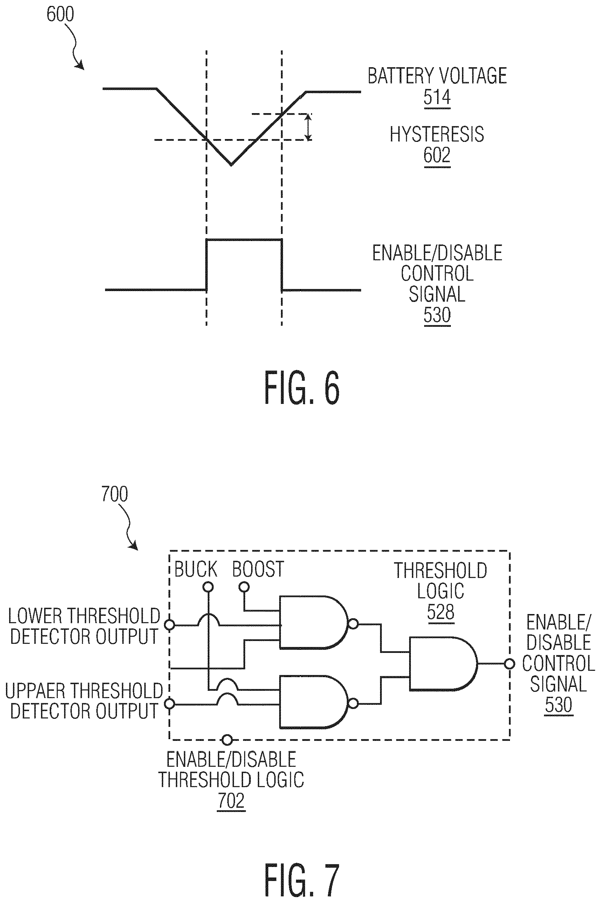

Figure 6 represents an example 600 graph of a hysteresis 602 in the second voltage converter 502. The two threshold detectors 524, 526 enable the hysteresis 602 in the enable/disable control signal 530. If the battery voltage 514 drops below the lower threshold, then the enable/disable control signal 530 is set to disable the comparator & control logic 510. If the battery voltage 514 rises above the upper threshold, the enable/disable control signal 530 is set to enable the comparator & control logic 510. In some example embodiments, the hysteresis 602 avoids stability issues that analog control loops (e.g. where the comparator & control logic 510 is analog) have.

Figure 7 represents an example 700 threshold logic 528 within in the second voltage converter 502. As shown, the threshold logic 528 logically ANDs an output from the lower threshold detector 524, the upper threshold detector 526, buck-mode and boost-mode signals from the controller 532, and an enable/disable threshold logic signal 702 from the controller 532 to generate the enable/disable control signal 530 sent to the comparator & control logic 510.

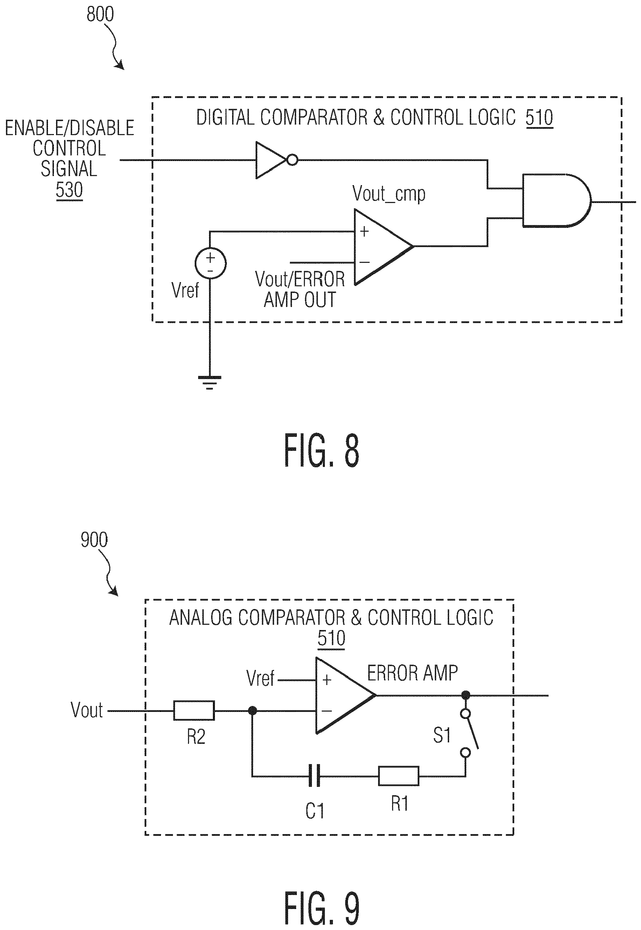

Figure 8 represents an example 800 digital comparator & control logic 510 circuit within in the second voltage converter 502. Since the control logic 510 is digital, the enable/disable control signal 530 can be blocked with an AND gate.

Figure 9 represents an example 900 analog comparator & control logic 510 circuit within in the second voltage converter 502. In example embodiments using a switched-capacitor voltage converter 502 having control loops with an ADC or analog loops (second order loops), switching must be stopped and the loop must be frozen to prevent saturation. Freezing the state of the controller could be done by stopping a clock of the ADC.

The analog control loop shown contains capacitor C1. If switching is stopped while the voltage converter's 502 final output voltage is not yet reached, the capacitor C1 voltage will saturate. To prevent this and resume switching with the correct duty-cycle or peak current setting, the controller 532 can isolate the capacitor C1 with switch S1, as shown. Switching can be stopped by pulling the feedback input high, or forcing the output of the opamp to zero, or blocking the gate drivers for the power switches.

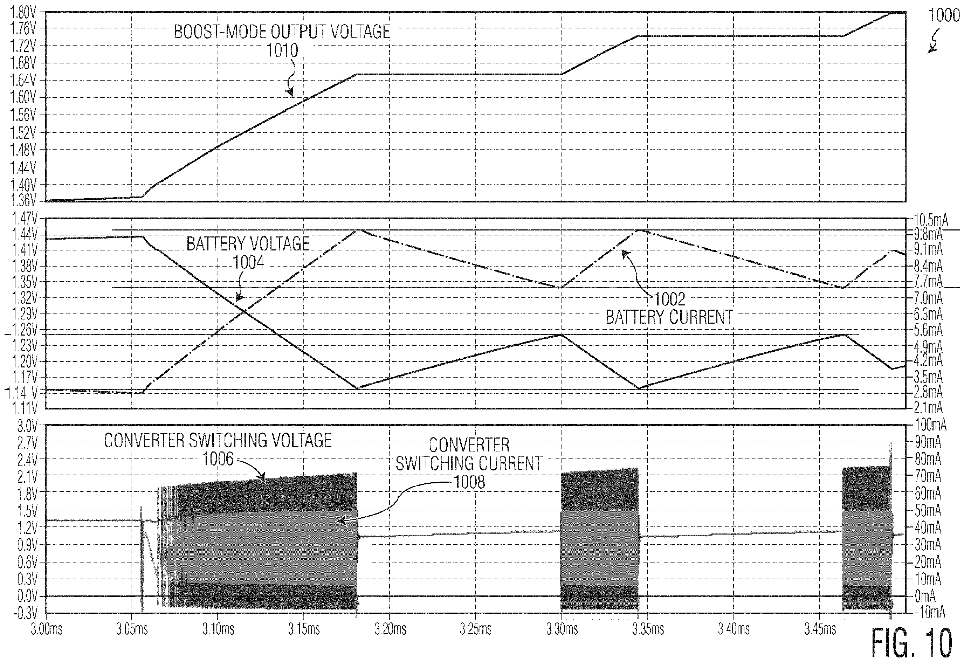

Figure 10 represents an example 1000 graph of the second voltage converter 502 in boost-mode operation with a battery having a 40 Ω internal resistance. The battery current 1002, battery voltage 1004, converter switching voltage 1006, converter switching current 1008, and boost-mode output voltage 1010 are shown.

In this example embodiment, the lower battery voltage 514 threshold voltage is about 1.15 V. The threshold detectors 524, 526 gate the switching and thus the start-up of the voltage converter 502 thereby resulting the battery voltage 514 having a staircase waveform, thus the voltage converter 502 starts up with interruptions. In this example 1000, the boost-mode output voltage 516 steps up until a predetermined boost-mode output voltage 1010 (as determined by the load) has been reached.

Here the thresholds are set to 1.15 V and 1.25 V. The boost-mode output voltage 1010 increases in phases. Switching is interrupted whenever the battery voltage 1004 (eg. Vbat_lv) drops below 1.15 V and starts again when it rises back to 1.25 V. The battery current 1002 is lower than the average inductor current because of a big input capacitor.

Without the threshold detectors 524, 526, the battery voltage 1004 would drop to far below 1.1 V. With the threshold detectors 524, 526, the battery voltage 1004 stays above the safe limit. The battery current 1002 eventually oscillates between 10 mA and 7.45 mA, 8.725 mA on average. In contrast with the first voltage converter's 202 operation shown in Figure 3, the maximum battery current 1002 for the second voltage converter 502 is 8.75 mA for a 40 Ω internal battery resistance. The battery current 512 is automatically regulated to a maximum that the battery 504 can support.

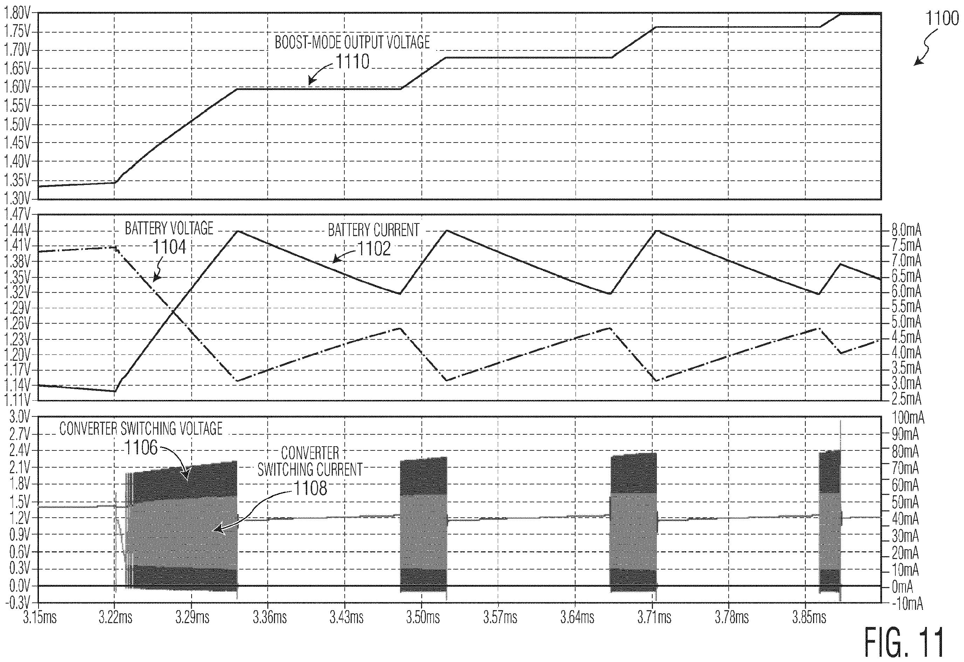

Figure 11 represents an example 1100 graph of the second voltage converter 502 in boost-mode operation with a battery having a 50 Ω internal resistance. The battery current 1102, battery voltage 1104, converter switching voltage 1106, converter switching current 1108, and boost-mode output voltage 1110 are shown.

With 50 Ω battery resistance, it takes longer to start-up, because an average battery current 1102 is lower. The battery current 1102 now varies between 6 mA and 8 mA. Again referring to Figure 3, the maximum allowed current is 7 mA, and the voltage converter 502 is using a maximum possible battery current 1102 for reliable start-up.

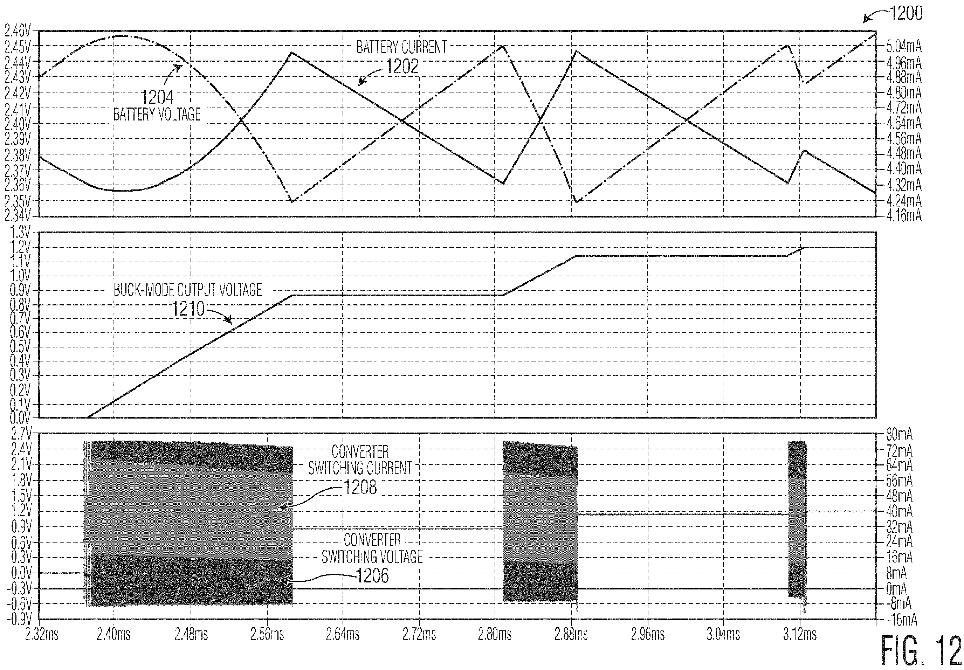

Figure 12 represents an example 1200 graph of the second voltage converter 502 in buck-mode operation with a battery having a 150 Ω internal resistance. The battery current 1202, battery voltage 1204, converter switching voltage 1206, converter switching current 1208, and buck-mode output voltage 1210 are shown. In buck-mode, the buck-mode output voltage 1210 steps down until another predetermined output voltage (as determined by the load) has been reached.

In this example embodiment, the minimum battery voltage 1204 threshold is about 2.35 V. The battery current 1202 now varies between 4.32 mA and 5 mA. The buck-mode output voltage 1210 (e.g. Vbat_lv) steps in three phases to a programmed value of 1.2 V.

Hysteresis is assumed to be around 100 mV. With less hysteresis, a frequency of the enable/disable control signal 530 will be higher, the ripple on the battery voltage 514 will be lower, but start-up will still be reliable. In alternate example embodiments, if hysteresis is set to 0, start-up could be done on a cycle-by-cycle basis, if the voltage loop comparator is fast enough. Hysteresis is not essential but does reduce the frequency of the enable/disable control signal 530 and increases a ripple on the battery voltage 1204.

Thus even with this extreme battery resistance (i.e. 150 Ω in some silver-oxide batteries and printed batteries), start-up is reliable and as fast as possible with the available energy.

Applications of the voltage converter 502 include any portable or stand-alone electronic device using small batteries, such as hearing aids, insulin monitors and insulin pumps, and radio-controlled lighting devices.

Various instructions and/or operational steps discussed in the above Figures can be executed in any order, unless a specific order is explicitly stated. Also, those skilled in the art will recognize that while some example sets of instructions/steps have been discussed, the material in this specification can be combined in a variety of ways to yield other examples as well, and are to be understood within a context provided by this detailed description.

In some example embodiments these instructions/steps are implemented as functional and software instructions. In other embodiments, the instructions can be implemented either using logic gates, application specific chips, firmware, as well as other hardware forms.

One example discloses a voltage converter, comprising: an input configured to receive a first voltage from a battery; an output configured to provide a second voltage to a load; a controller configured to reduce a battery current received from the battery if the first voltage received from the battery is below a first threshold voltage.

When the instructions are embodied as a set of executable instructions in a non-transitory computer-readable or computer-usable media which are effected on a computer or machine programmed with and controlled by said executable instructions. Said instructions are loaded for execution on a processor (such as one or more CPUs). Said processor includes microprocessors, microcontrollers, processor modules or subsystems (including one or more microprocessors or microcontrollers), or other control or computing devices. A processor can refer to a single component or to plural components. Said computer-readable or computer-usable storage medium or media is (are) considered to be part of an article (or article of manufacture). An article or article of manufacture can refer to any manufactured single component or multiple components. The non-transitory machine or computer-usable media or mediums as defined herein excludes signals, but such media or mediums may be capable of receiving and processing information from signals and/or other transitory mediums.

It will be readily understood that the components of the embodiments as generally described herein and illustrated in the appended figures could be arranged and designed in a wide variety of different configurations. Thus, the detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

## Claims

1. A voltage converter, comprising:
an input configured to receive a first voltage from a battery;
an output configured to provide a second voltage to a load;
a controller configured to reduce a battery current received from the battery if the first voltage received from the battery is below a first threshold voltage.

2. The voltage converter of claim 1:
wherein the controller is configured to generate an enable/disable control signal based on the first voltage received from the battery and the first threshold voltage.

3. The voltage converter of claim 2:
wherein the enable/disable control signal is a digital signal having an enable state and a disable state.

4. The voltage converter e of claim 3:
wherein if the enable/disable control signal is set to the disable state, then power transfer from the battery to the load is stopped.

5. The voltage converter of claim 3:
wherein if the enable/disable control signal is set to the enable state, then power is transferred from the battery to the load.

6. The voltage converter of claim 3:
wherein if the enable/disable control signal is set to the disable state, then the voltage converter is placed in a low-power stand-by state.

7. The voltage converter of any preceding claim:
wherein the controller is configured to increase the battery current received from the battery if the first voltage received from the battery is above a second threshold voltage.

8. The voltage converter of claim 7:
wherein a difference between the first threshold voltage and the second threshold voltage defines a hysteresis.

9. The voltage converter of claim 8:
wherein the hysteresis is set to zero.

10. The voltage converter of any of claims 7 to 9:
wherein the controller is configured to no longer reduce the battery current received from the battery if the second voltage at the load reaches a third threshold voltage, even if the first voltage received from the battery is below the first threshold voltage.

11. The voltage converter of any preceding claim:
wherein the controller is configured to place the converter into a boost-mode such that the second voltage is greater than the first voltage.

12. The voltage converter of any preceding claim:
wherein the controller is configured to place the converter into a buck-mode such that the second voltage is less than the first voltage.

13. The voltage converter of any preceding claim:
wherein the voltage converter is a DC-to-DC voltage converter.

14. The voltage converter of any preceding claim:
wherein the voltage converter is a switched-capacitor voltage converter.

15. The voltage converter of claim 14:
wherein if the enable/disable control signal is set to disable, then the controller is configured to stop switching of the switched-capacitor voltage converter.
